# EUROPEAN PATENT APPLICATION

(11) **EP 4 600 613 A1**
(43) Date of publication of application: **13.08.2025**
(21) Application number: 25156206.2
(22) Date of filing: 06.02.2025
(51) Int. Cl.: G01D 5/347, G03B 17/52

(54) **PRINTER AND DIGITAL CAMERA WITH PRINTER**

(30) Priority: 08.02.2024 JP 2024017732
(71) Applicant: FUJIFILM Corporation, Tokyo 106-8620 (JP)
(72) Inventor: KAYA, Akimasa, Saitama (JP)
(74) Representative: Meissner Bolte Partnerschaft mbB

(57) **Abstract**

Provided are a printer and a digital camera with a printer capable of accurately positioning a photo-interrupter that outputs a rotation detection signal of a member that rotates in conjunction with transport of a recording medium, via a simple operation and capable of suppressing an increase in cost.

A printer includes an encoder plate that rotates in conjunction with transport of a recording medium and on which slits are radially formed, a photo-interrupter that emits light to the encoder plate and receives the light to output a rotation detection signal, a fixed slit plate that narrows the light emitted from the photo-interrupter, and a positioning portion that positions the photo-interrupter with respect to the fixed slit plate and includes a reference holding portion and a deformable holding portion provided at a position facing the reference holding portion, in which the deformable holding portion is deformed to hold the photo-interrupter.

## Description

### BACKGROUND OF THE INVENTION

### 1. Field of the Invention

The present invention relates to a printer and a digital camera with a printer.

### 2. Description of the Related Art

A printer disclosed in JP2005-300838A records an image on an instant film. The printer comprises a pair of transport rollers, a pair of spreading rollers that are provided downstream of the pair of transport rollers in a transport direction and spread a developer with an instant film interposed therebetween, a motor that applies a rotational driving force to both the transport rollers and the spreading rollers, and a gear train that transmits the rotational driving force of the motor to the transport rollers and the spreading rollers, in which the gear train includes a first sub-gear train that transmits the rotational driving force from the motor to a middle stage, a second sub-gear train that directly receives the rotational driving force transmitted from the first sub-gear train and transmits the rotational driving force to the transport rollers, and a third sub-gear train that directly receives the rotational driving force transmitted from the first sub-gear train and transmits the rotational driving force to the spreading rollers.

A printer disclosed in JP2007-290157A comprises an exposure device, in which a body of the exposure device comprises a cleaning unit that is attached movably, a motor that drives the cleaning unit, a gear, a belt, and the like that transmit a driving force of the motor to the cleaning unit.

### SUMMARY OF THE INVENTION

One embodiment according to the technology of the present disclosure provides a printer and a digital camera with a printer capable of accurately positioning a photo-interrupter that outputs a rotation detection signal of a member that rotates in conjunction with transport of a recording medium, via a simple operation and capable of suppressing an increase in cost.

An aspect of the technology of the present disclosure provides a printer comprising: an encoder plate; a photo-interrupter; a fixed slit plate; and a positioning portion. The encoder plate rotates in conjunction with transport of a recording medium and on which slits are radially formed. The photo-interrupter emits light to the encoder plate and receives the light to output a rotation detection signal. The fixed slit plate narrows the light emitted from the photo-interrupter. The positioning portion positions the photo-interrupter with respect to the fixed slit plate and includes a reference holding portion and a deformable holding portion provided at a position facing the reference holding portion, in which the deformable holding portion is deformed to hold the photo-interrupter.

It is preferable that the photo-interrupter is interposed and held between the reference holding portion and the deformable holding portion.

It is preferable that the deformable holding portion is a protrusion portion that protrudes in a circumferential direction of the encoder plate.

It is preferable that a protrusion amount of the deformable holding portion is within an outer shape tolerance range of the photo-interrupter.

It is preferable that the positioning portion has an opening portion in which at least a part of the photo-interrupter is accommodated, and the reference holding portion and the deformable holding portion are positioned inside the opening portion.

It is preferable that the deformable holding portion is deformed by being pressed by the photo-interrupter in a case in which the photo-interrupter is accommodated in the opening portion.

It is preferable that the printer further comprise a fixing member that fixes the photo-interrupter positioned by the positioning portion.

It is preferable that the printer further comprise a case member that holds the encoder plate and the positioning portion, in which the fixing member is a fastening member that is fastened to the case member.

It is preferable that the printer further comprise a transport roller that transports the recording medium, in which the encoder plate is provided on the same axis as the transport roller.

It is preferable that the recording medium is an instant film, and the printer further comprises an exposure head that exposes the instant film to record an image.

Another aspect of the technology of the present disclosure provides a digital camera with a printer, comprising: the printer according to the above-described aspect; and an imaging element that images a subject, in which the recording medium is an instant film, and the printer includes an exposure head that exposes an image captured by the imaging element onto the instant film.

### BRIEF DESCRIPTION OF THE DRAWINGS

Fig. 1 is a front perspective view of a digital camera with a printer.
Fig. 2 is a central longitudinal cross-sectional view of the digital camera with a printer.
Fig. 3 is a rear perspective view of the digital camera with a printer in a state in which a loading lid is positioned at a closed position.
Fig. 4 is a perspective view of an instant film pack.
Fig. 5 is a cross-sectional view of the instant film pack.
Fig. 6 is an exploded perspective view of the instant film pack.
Fig. 7 is a cross-sectional view of the instant film.
Fig. 8 is a cross-sectional view of a main part of a printer unit.
Fig. 9 is a perspective view of the printer unit in which a case member, an exposure head, a rotation detection sensor, and the like are omitted.
Fig. 10 is a perspective view of the printer unit.
Fig. 11 is a perspective view of the rotation detection sensor.
Fig. 12 is a cross-sectional view of the main part of the printer unit.
Fig. 13A is a plan view of an encoder plate and Fig. 13B is a plan view of a photo-interrupter.
Fig. 14 is an exploded perspective view of the rotation detection sensor and a perspective view of a cover member.
Fig. 15 is a plan view of the cover member.
Fig. 16 is a cross-sectional view of the cover member taken along XVI-XVI line of Fig. 15.
Fig. 17 is an explanatory view showing attachment of the photo-interrupter to the cover member.
Fig. 18 is an explanatory view showing dimensions of a reference holding portion and a deformable holding portion in an accommodation portion.
Figs. 19A and 19B are explanatory views showing a step of positioning the photo-interrupter via the reference holding portion and the deformable holding portion, in which Fig. 19A shows a state before the photo-interrupter is held by the reference holding portion and the deformable holding portion, and Fig. 19B shows a state after the photo-interrupter is held by the reference holding portion and the deformable holding portion.
Fig. 20 is an explanatory view showing a state in which the photo-interrupter is incorporated in a printer of the related art.

### DESCRIPTION OF THE PREFERRED EMBODIMENTS

### First Embodiment

### Overview of Digital Camera with Printer

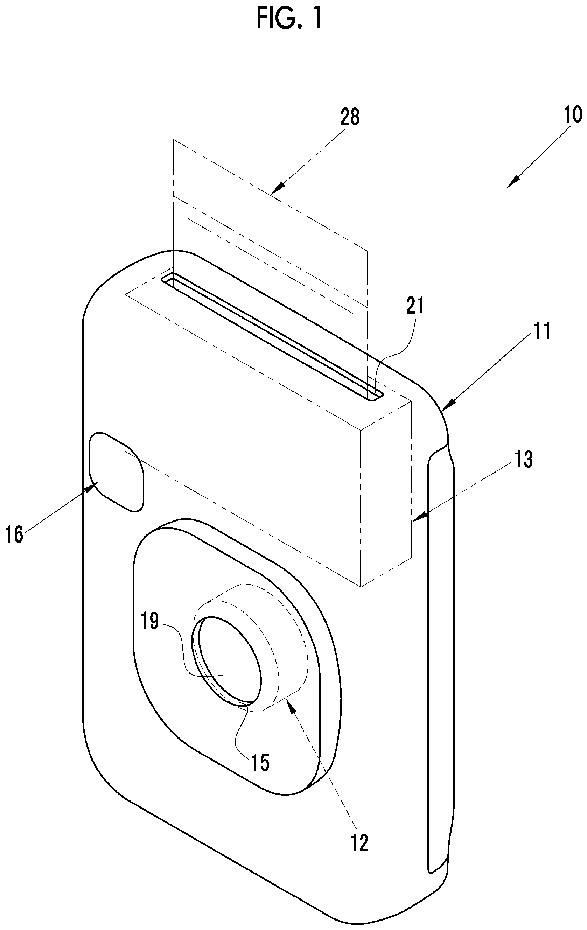

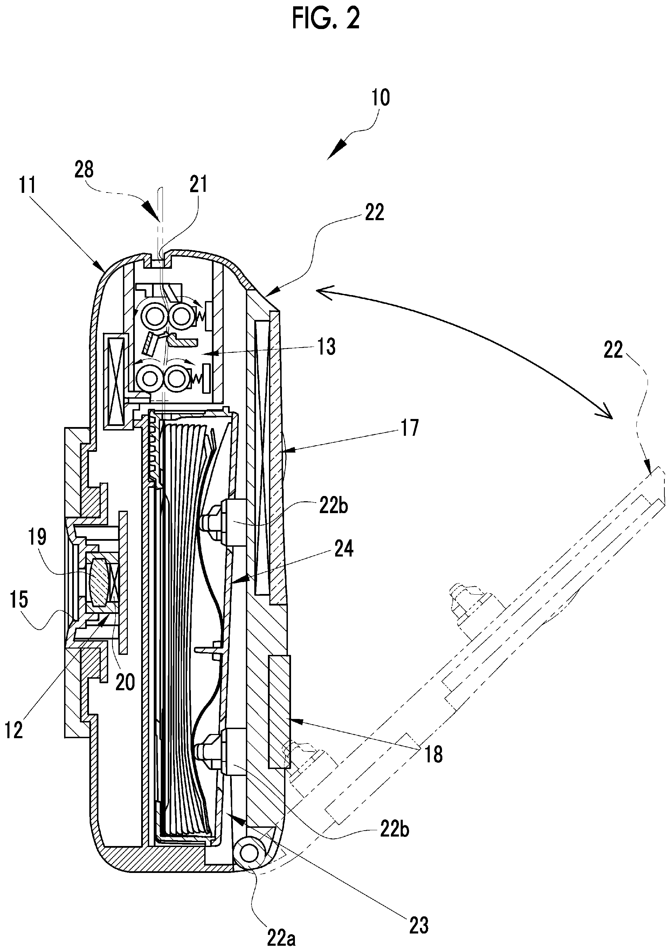

In Fig. 1, a digital camera 10 with a printer according to an embodiment of the present invention comprises a camera body 11, an imaging unit 12, and a printer unit 13. A front surface of the camera body 11 is provided with an imaging window 15 and a release switch 16. The imaging window 15 is disposed in the center on the front surface of the camera body 11. The imaging window 15 exposes an imaging optical system 19 (see Fig. 2) constituting the imaging unit 12.

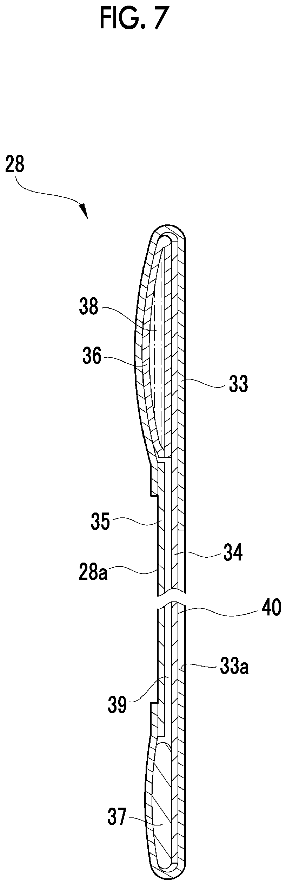

The camera body 11 has a vertically long rectangular shape as seen from the front. The digital camera 10 with a printer uses an instant film 28 (see Fig. 7) as a sheet-like recording medium. The instant film 28 is, for example, a card-type instant film. It should be noted that the present invention is not limited to this, a square type or wide type instant film may be used. The instant film 28 corresponds to a recording medium in the claims.

As shown in Fig. 2, the imaging optical system 19 and an imaging element 20 are provided in the imaging unit 12. The imaging element 20 is, for example, a complementary metal-oxide-semiconductor (CMOS) type image sensor, and has a light receiving surface composed of a plurality of pixels (not shown) arranged in a two-dimensional matrix. Each pixel includes a photoelectric conversion element, photoelectrically converts a subject image formed on the light receiving surface by the imaging optical system 19, and generates an imaging signal.

The imaging element 20 comprises signal processing circuits such as a noise removal circuit, an automatic gain controller, and an A/D conversion circuit (none of which is shown). The noise removal circuit executes noise removal processing on the imaging signal. The automatic gain controller amplifies a level of the imaging signal to an optimal value. The A/D conversion circuit converts the imaging signal into a digital signal, and outputs the digital signal to a built-in memory (not shown) from the imaging element 20. The output signal from the imaging element 20 is image data (so-called RAW data) having one color signal for each pixel.

In a case in which the release switch 16 is pressed, the imaging element 20 is driven, and the subject image is captured. A film discharge port 21 is provided on an upper surface of the camera body 11. The instant film 28 on which the image has been printed is discharged from the film discharge port 21.

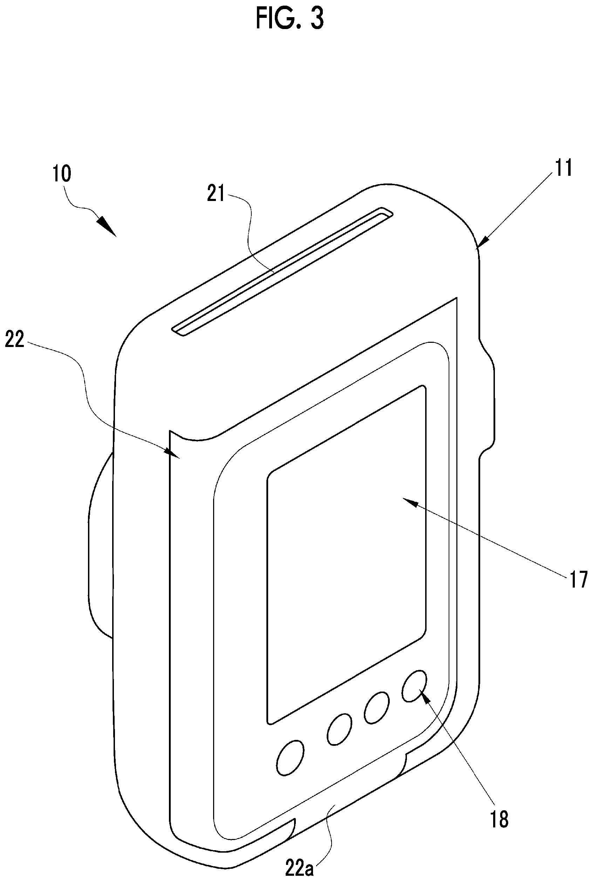

As shown in Fig. 3, a loading lid 22 is attached to a rear surface side of the camera body 11 by using a hinge portion 22a. The hinge portion 22a supports the loading lid 22 in a rotatable manner between an open position (a position indicated by a solid line in Fig. 2) and a closed position (a position indicated by a two-dot chain line in Fig. 2). It should be noted that a locking mechanism and an unlocking mechanism (none of which is shown) are provided between the camera body 11 and the loading lid 22, and in a case in which the locking mechanism holds the loading lid 22 at the closed position and operates the unlocking mechanism, the loading lid 22 moves rotationally from the closed position to the open position.

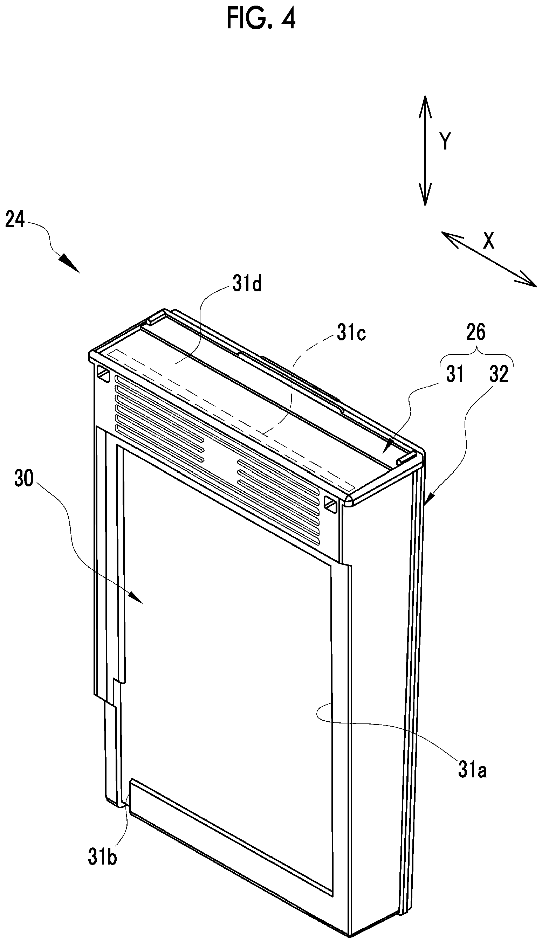

As shown in Fig. 4, an instant film pack 24 in which the instant film 28 is accommodated is loaded into a loading chamber 23. A plurality of film press portions 22b are provided on an inner surface of the loading lid 22.

In a case in which the instant film pack 24 is loaded into the loading chamber 23 and the loading lid 22 is positioned at the closed position, the plurality of film press portions 22b enter the inside of the instant film pack 24 through an opening 32a (see Fig. 7) and press a film press plate 27 (see Fig. 7). Therefore, the instant film 28 in the instant film pack 24 is pressed in a stacking direction.

A rear display unit 17 and an operation unit 18 are provided on an outer surface of the loading lid 22, that is, on the rear surface of the camera body 11. The rear display unit 17 is, for example, a liquid crystal display (LCD) panel or an organic electroluminescent (EL) display (OELD). Pieces of the image data for one frame output from the imaging element 20 are sequentially input into the rear display unit 17, and are displayed as a live preview image.

In a case in which the release switch 16 is pressed by a person who captures an image, the imaging is started. In the imaging, the image data is acquired from the imaging element 20. An image processing unit (not shown) performs known image processing on the image data, and then the image data is compressed. Examples of the image processing include matrix operation, demosaicing processing, γ correction, brightness conversion, color difference conversion, and resize processing. The image data on which the image processing and the compression have been performed is recorded in the built-in memory (not shown) such as a flash memory provided within the camera body 11.

In a case in which a menu switch of the operation unit 18 is pressed, the image is played and displayed on the rear display unit 17 based on the image data recorded in the built-in memory. In a case in which an image to be printed is displayed on the rear display unit 17, the person who captures an image presses a print switch of the operation unit 18, and thus printing processing via the printer unit 13 is started.

### Configuration of Instant Film Pack

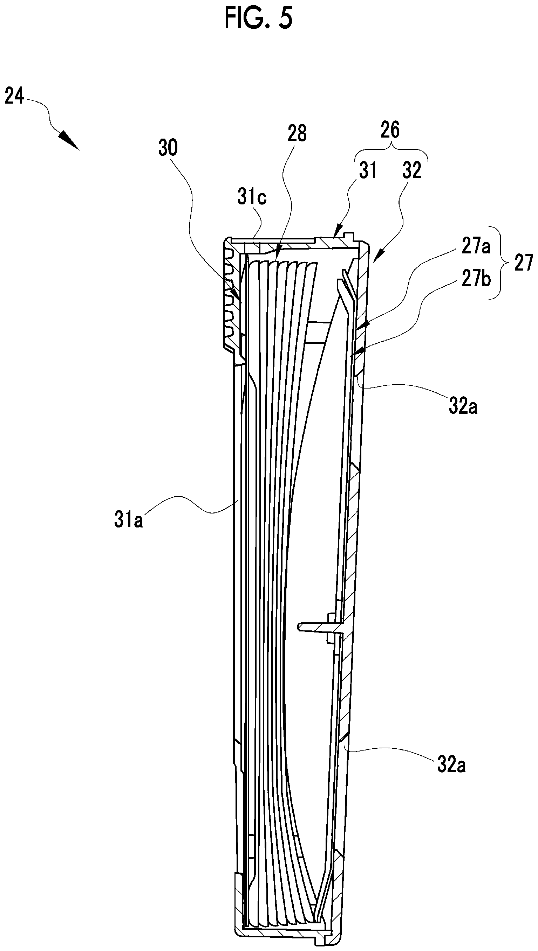

As shown in Figs. 4 and 5, the instant film pack 24 comprises a case 26, a film press plate 27, a plurality of instant films 28, and a film cover 30.

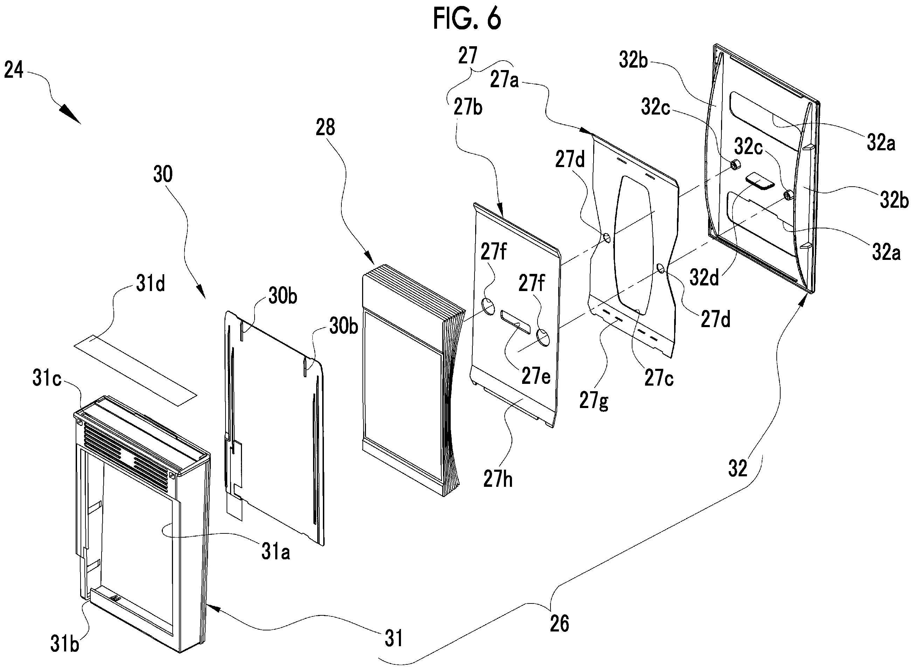

As shown in Fig. 6, the case 26 accommodates the plurality of instant films 28 and one film cover 30 in a stacked manner. The case 26 is made of a material, such as a thermoplastic resin or a paper resin acquired by mixing the thermoplastic resin with cellulose. The case 26 includes a box-shaped case member 31 and a lid 32 that covers an opening formed in a rear surface side of the case member 31.

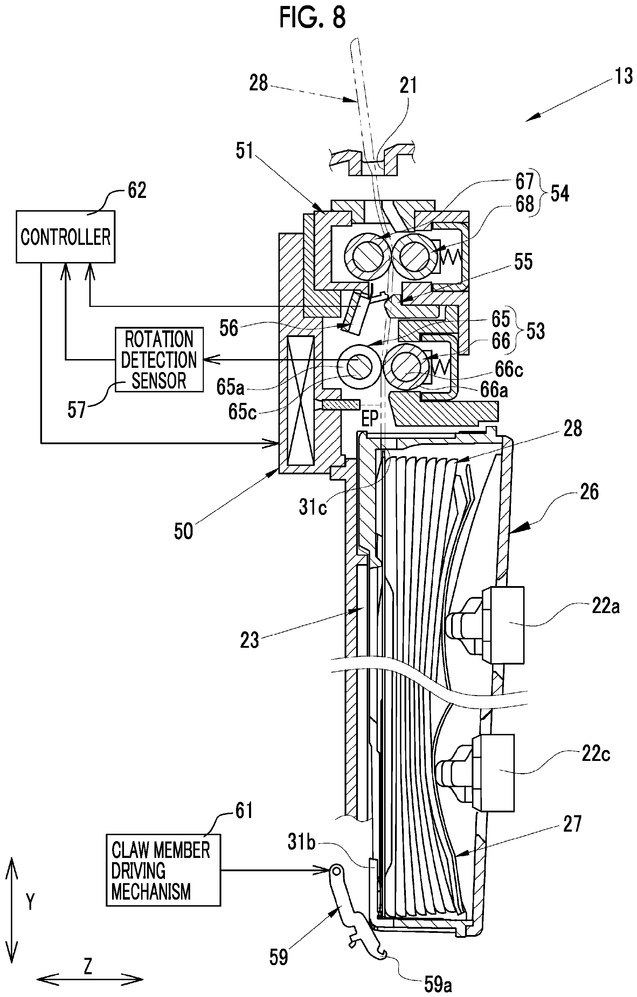

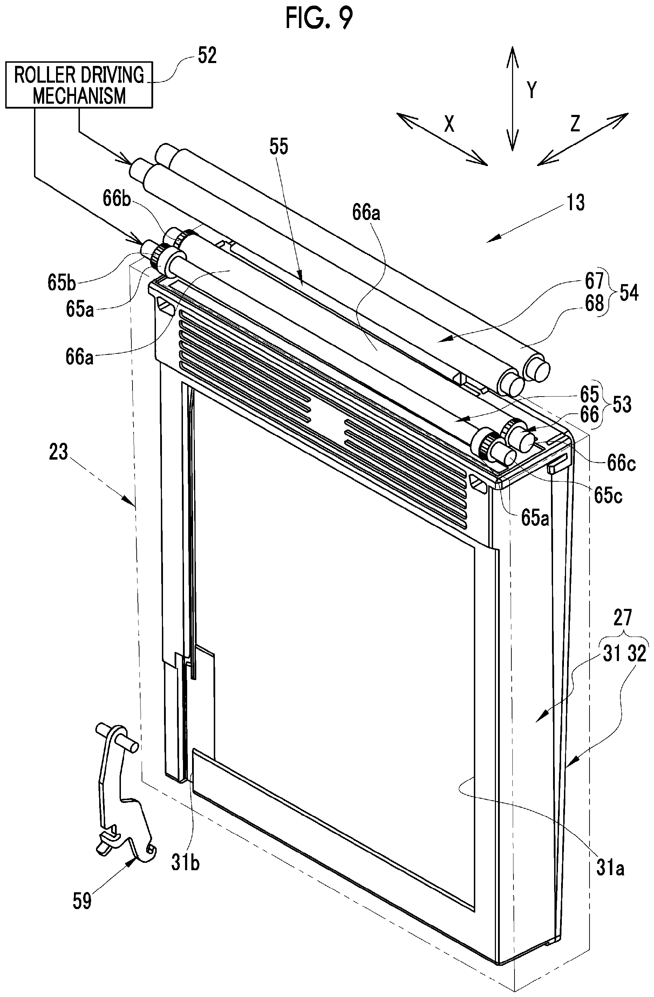

An exposure aperture 31a for exposing the instant film 28 is formed in the case member 31. In the following description, a surface of the instant film pack 24 in which the exposure aperture 31a is formed will be referred to as a "front surface", a surface opposite to the "front surface" will be referred to as a "rear surface", a surface facing the film discharge port 21 of the camera body 11 will be referred to as an "upper surface", and a surface opposite to the "upper surface" will be referred to as a "bottom surface". The film cover 30 is overlapped before the instant film 28 positioned in the foremost layer initially set in the exposure aperture 31a within the case member 31. As a result, the exposure aperture 31a is light-tightly blocked by the film cover 30. A notch 31b into which a known claw member 59 (see Figs. 8 and 9) formed at the camera is inserted is formed in a lower portion of the exposure aperture 31a. The notch 31b is a linear notch through which the claw member 59 passes in a case in which the instant film 28 or the film cover 30 is fed out. The notch 31b is connected from the lower portion of the exposure aperture 31a to the bottom surface of the case member 31.

A feed port 31c is formed on an upper surface of the case member 31. The feed port 31c is formed in a slit shape. The instant films 28 or the film cover 30 are fed out one by one outwards from the instant film pack 24 by the claw member 59 inserted into the notch 31b of the case member 31 through the feed port 31c.

A light shielding seal 31d is attached to the case member 31 so as to close the feed port 31c from an outside. The light shielding seal 31d is formed in a flexible sheet shape. The light shielding seal 31d is attached to only one edge of a long side of the feed port 31c so as not to hinder the instant film 28 or the film cover 30 in a case in which the instant film or the film cover passes through the feed port 31c.

The lid 32 has a pair of openings 32a, a pair of unit support projections 32b, a pair of caulking pins 32c, and a support piece 32d. The pair of openings 32a are formed so as to be spaced apart from each other in an up-down direction by a predetermined interval, and serve as an entrance into which the film press portions 22b provided in the digital camera 10 with a printer are inserted in a case in which the digital camera 10 with a printer is loaded.

The pair of unit support projections 32b are provided at both side edge portions of the lid 32 so as to be vertically long, and each have an arc shape with the center portion protruding toward the exposure aperture 31a. The unit support projections 32b come into contact with both side edge portions on the rear surface of the instant film 28 positioned in the rearmost layer, and press up the instant film 28 in the arc shape with the center portion protruding toward the exposure aperture 31a. As a result, a gap between the film cover 30 and the exposure aperture 31a is prevented from being formed.

The pair of caulking pins 32c are used to attach the film press plate 27. The support piece 32d supports the center portion of the instant film 28 positioned in the rearmost layer from behind, and prevents the instant film 28 from being bent in a direction in which the center portion is curved toward the lid 32.

The film press plate 27 consists of two elastic sheets 27a and 27b made of a synthetic resin. The sheet 27a is pressed by the plurality of film press portions 22b in a case in which the loading lid 22 is closed, and is curved so as to protrude toward the lid 32. An opening 27c and a pair of holes 27d are formed in the sheet 27a. The opening 27c is formed in the center portion of the sheet 27a so as to be vertically long, and the support piece 32d is inserted into the opening 27c. The pair of caulking pins 32c are inserted into the pair of holes 27d, and the pair of holes 27d are used to attach the film press plate 27 to the lid 32.

An opening 27e and a pair of holes 27f are formed in the sheet 27b. The opening 27e is formed in the center portion of the sheet 27a, and the support piece 32d is inserted into the opening 27e. The pair of caulking pins 32c are inserted into the pair of holes 27f. The sheet 27b has a lower end portion 27h attached to a lower end portion 27g of the sheet 27a. Accordingly, the sheet 27b prevents the sheet 27a from being loosened, prevents light leakage from the pair of openings 32a, and presses up the instant film 28 in a substantially planar shape in a case in which the sheet 27a is elastically bent by the plurality of film press portions 22b. As a result, the film cover 30 or the instant film 28 positioned in the foremost layer is pressed to the back side of the front surface of the case member 31.

### Configuration of Instant Film

As shown in Fig. 7, the instant film 28 includes a mask sheet 33, a photosensitive sheet 34, a cover sheet 35, a developer pod 36, and a trap portion 37, and is a so-called mono-sheet type film. The mask sheet 33 is formed in a sheet shape made of a thin synthetic resin and comprises a screen opening 33a. A photosensitive layer, a diffuse-reflect layer, an image receiving layer, and the like are provided in the photosensitive sheet 34. The cover sheet 35 includes an exposure surface 28a facing an exposure head 50 described later.

The developer pod 36 is formed in a substantially bag shape, and encompasses a developer 38. The developer pod 36 is pasted onto the end portion of the photosensitive sheet 34 on the feed port 31c side, and is wrapped by the end portion of the mask sheet 33. The trap portion 37 is pasted onto the end portion of the photosensitive sheet 34 opposite to the feed port 31c side, and is similarly wrapped by the end portion of the mask sheet 33.

The photosensitive layer of the instant film 28 is irradiated with print light during the printing, and the photosensitive layer is exposed. The developer pod 36 is torn during the development, and the developer 38 flows and is spread into a gap 39 between the photosensitive sheet 34 and the cover sheet 35. An image acquired by the exposure of the photosensitive layer is reversed by the diffuse-reflect layer, and is transferred to the image receiving layer. In this way, a positive image appears on an image observation surface 40 of the photosensitive sheet 34 exposed via the screen opening 33a.

The film cover 30 is formed in a thin sheet shape, and has light shielding properties and flexibility. In a case in which the instant film pack 24 is used by being loaded into the loading chamber 23, the film cover 30 is discharged to the film discharge port 21 by spreading rollers 54 (see Figs. 8 and 9) described later.

### Configuration of Printer Unit

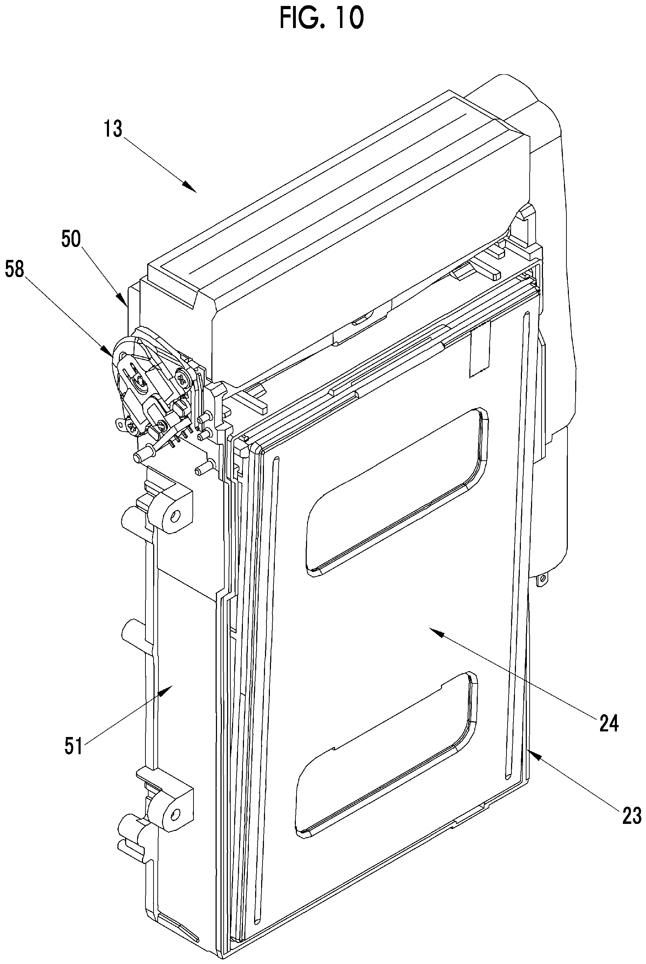

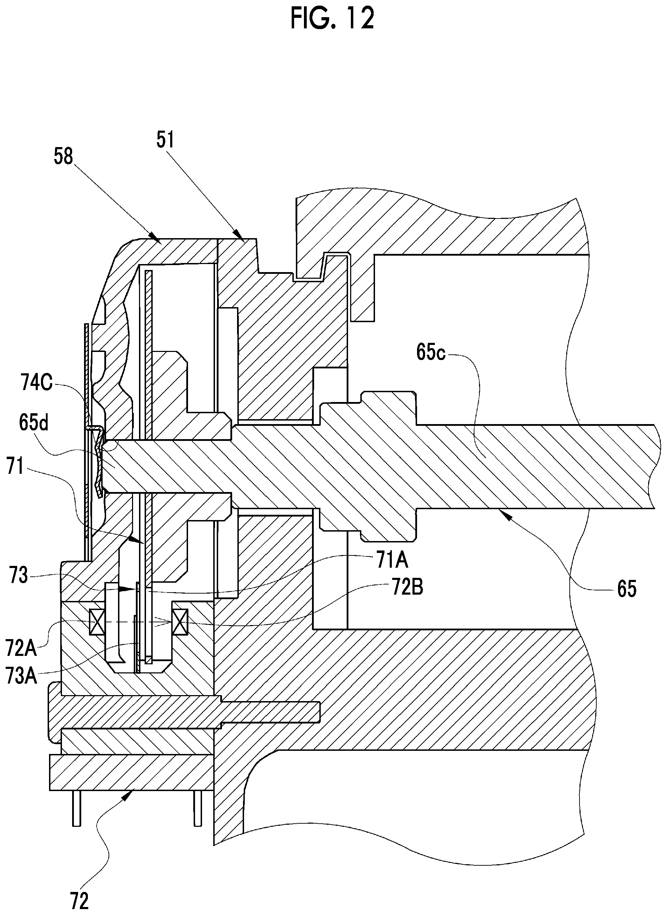

As shown in Figs. 8 and 9, the printer unit 13 includes the exposure head 50, a case member 51 (see Fig. 10), a roller driving mechanism 52, a pair of transport rollers 53, a pair of spreading rollers 54, a spreading control member 55, a distal end detection switch 56, a rotation detection sensor 57, a cover member 58 (see Figs. 10 and 12), the claw member 59, a claw member driving mechanism 61, and a controller 62. The printer unit 13 corresponds to a printer in the claims.

It should be noted that, in Figs. 8 and 9, the case member 51 and the like are not shown in order to avoid complication, but, in practice, the printer unit 13 is configured by attaching the exposure head 50, the roller driving mechanism 52, the transport rollers 53, the spreading rollers 54, the spreading control member 55, the distal end detection switch 56, the rotation detection sensor 57, the cover member 58, the claw member 59, the claw member driving mechanism 61, and the like to the case member 51.

It should be noted that, hereinafter, a transport direction in which the transport rollers 53 transport the instant film 28 will be referred to as a Y direction, a width direction of the instant film 28 orthogonal to the Y direction will be referred to as an X direction, and a direction orthogonal to the X direction and the Y direction will be referred to as a Z direction.

As shown in Fig. 10, the case member 51 is formed in a box shape in which the rear surface side of the camera body 11 is opened, and the loading chamber 23 is integrally provided. It should be noted that Fig. 10 shows a state in which the instant film pack 24 is loaded into the loading chamber 23. The case member 51 is made of, for example, a resin material.

As described so far, the instant film pack 24 is loaded into the loading chamber 23. The image is recorded on the instant film 28 discharged from the instant film pack 24 by the printer unit 13.

### Configuration of Pair of Transport Rollers and Pair of Spreading Rollers

The transport rollers 53 and the spreading rollers 54 are pivotally supported by a bearing unit (not shown) provided in the case member 51. The transport rollers 53 and the spreading rollers 54 are rotationally driven by the roller driving mechanism 52, and transport the film cover 30 and the instant film 28. The roller driving mechanism 52 comprises, for example, a motor as a driving source and a driving transmission gear train that transmits a rotational driving force.

The transport rollers 53 include a capstan roller 65 and a pinch roller 66. The capstan roller 65 and the pinch roller 66 are disposed at positions at which these rollers interpose a transport passage of the instant film 28 (see Fig. 8). The capstan roller 65 includes a pair of cylindrical grip roller members 65a, a driving gear 65b, and a rotation shaft 65c that holds each grip roller member 65a and the driving gear 65b.

The pinch roller 66 includes a roller member 66a, a driving gear 66b, and a rotation shaft 66c. The driving gears 65b and 66b are provided at both end portions of the rotation shafts 65c and 66c and mesh with each other. The motor is connected to one end of the rotation shaft 65c via the driving transmission gear train. Therefore, in a case in which the motor rotates, the capstan roller 65 and the pinch roller 66 rotate in synchronization with the motor. The instant film 28 discharged from the instant film pack 24 is transported toward the spreading rollers 54 by the transport rollers 53.

The spreading rollers 54 include spreading rollers 67 and 68, and are disposed downstream of the transport rollers 53 in the transport direction. The spreading roller 67 is disposed on a side of the instant film 28 facing the exposure surface 28a. The spreading roller 68 is disposed on a side of the instant film 28 facing the image observation surface 40. The motor is connected to one end of the spreading roller 67 or 68 via the driving transmission gear train. Therefore, in a case in which the motor rotates, the spreading rollers 67 and 68 rotate in synchronization with the motor.

The spreading rollers 54 transport the instant film 28 transported by the transport rollers 53 toward the film discharge port 21 while pinching the instant film over the entire width. The instant film is pinched by the spreading rollers 54, and thus the developer pod 36 of the instant film 28 is crushed. As a result, the developer is spread (unfolded) into the gap 39 (see Fig. 7).

The transport rollers 53 transport the instant film 28 fed out from the instant film pack 24 by the claw member 59 toward the film discharge port 21. It should be noted that an exposure position EP (see Fig. 8) at which the exposure head 50 exposes the instant film 28 to the print light is positioned between the feed port 31c of the instant film pack 24 and the transport rollers 53. The exposure via the exposure head 50 is performed for a period during the transport via the transport rollers 53.

The controller 62 controls the exposure of the exposure head 50 based on the image data. The exposure via the exposure head 50 is performed by sequentially exposing line images on the instant film 28 while moving the instant film 28 for each line. As a result, an image corresponding to a single screen is exposed on the photosensitive layer of the instant film 28. The instant film 28 is continuously transported toward the spreading rollers 54 by the transport rollers 53.

### Configuration of Claw Member and Claw Member Driving Mechanism

In a case in which the instant film pack 24 is loaded into the loading chamber 23, the claw member 59 enters the inside of the case 26 and the instant film 28 is fed out one by one to the outside of the instant film pack 24.

The claw member 59 has a hook in which a distal end portion 59a is bent in a C shape (see Fig. 8), and the distal end portion 59a engages with a base end portion of the instant film 28 and presses the instant film 28. The claw member 59 is moved straight and driven rotationally by the claw member driving mechanism 61. The claw member driving mechanism 61 has a known configuration including the motor and the driving transmission gear train.

### Configuration of Spreading Control Member

As shown in Fig. 8, the spreading control member 55 is provided at a position between the transport rollers 53 and the spreading rollers 54 in the Y direction. The spreading control member 55 is formed in a plate shape extending in the X direction, and is fixed to the case member 51. The spreading control member 55 comes into contact with the image observation surface 40 of the instant film 28 that has been transported, and controls the distribution of the developer spread into the gap 39 by rubbing the image observation surface 40 of the instant film 28.

### Configuration of Distal End Detection Switch

The distal end detection switch 56 is, for example, a mechanical switch and is positioned in the vicinity of the spreading control member 55. The distal end detection switch 56 is in an ON state by receiving a pressing force from the distal end of the instant film 28, and can detect the distal end of the instant film 28.

The distal end detection switch 56 is in the ON state by receiving a pressing force from the distal end of the instant film 28. The distal end detection switch 56 in the ON state outputs a signal to the controller 62. The controller 62 that receives the signal from the distal end detection switch 56 counts the output signal from the rotation detection sensor 57, and then drives the exposure head 50 to start the exposure of the image on the instant film 28.

### Configuration of Rotation Detection Sensor

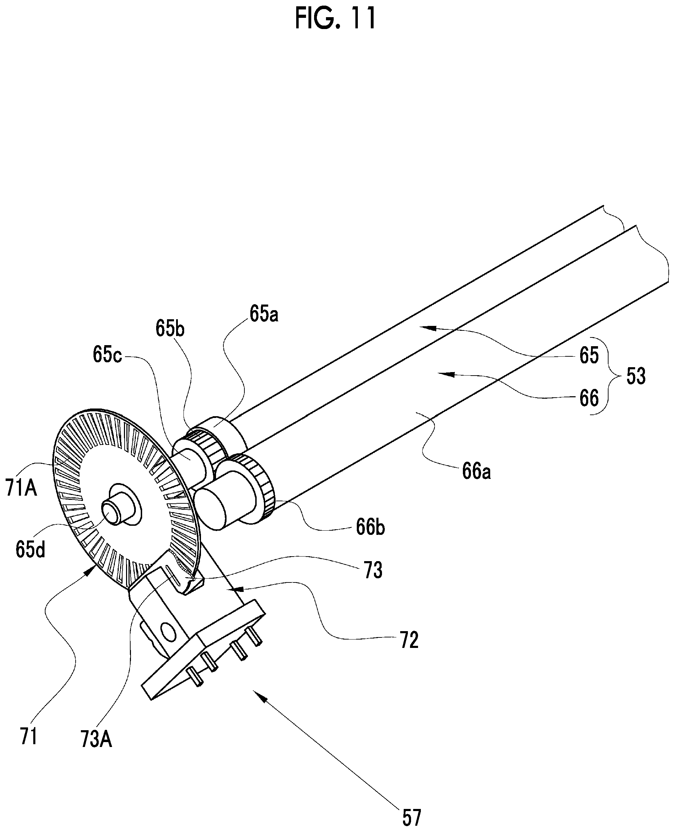

As shown in Fig. 11, the rotation detection sensor 57 includes an encoder plate 71, a photo-interrupter 72, and a fixed slit plate 73. The encoder plate 71 has a disk shape, and is formed with a plurality of slits 71A disposed radially.

The encoder plate 71 is provided on the same axis as the capstan roller 65 that is one of the transport rollers 53. Specifically, the central portion of the encoder plate 71 is fixed to the rotation shaft 65c of the capstan roller 65. As a result, the encoder plate 71 rotates in conjunction with the transport of the instant film 28 in a case in which the capstan roller 65 rotates.

In this way, since the capstan roller 65 is held by the case member 51, the encoder plate 71 provided integrally with the capstan roller 65 is also supported by the case member 51. The encoder plate 71 is disposed outside the case member 51. In addition, an end portion 65d (see Fig. 12) of the rotation shaft 65c protrudes through the encoder plate 71 to the outside of the case member 51.

As shown in Fig. 12, the photo-interrupter 72 is an optical sensor having a light emitting unit 72A and a light receiving unit 72B. The photo-interrupter 72 has an outer shape formed in a U-shape, the light emitting unit 72A is disposed at one end portion thereof, the light receiving unit 72B is disposed at the other end portion thereof, and the light emitting unit 72A and the light receiving unit 72B are provided at positions facing each other. The light emitting unit 72A is, for example, a light emitting diode. The light receiving unit 72B is, for example, a light receiving element. In the photo-interrupter 72, the light emitted from the light emitting unit 72A is received by the light receiving unit 72B. In the present embodiment, the encoder plate 71 and the fixed slit plate 73 are disposed between the light emitting unit 72A and the light receiving unit 72B. The fixed slit plate 73 is positioned on the light emitting unit 72A side with respect to the encoder plate 71. A light quantity stop slit 73A is formed in the fixed slit plate 73.

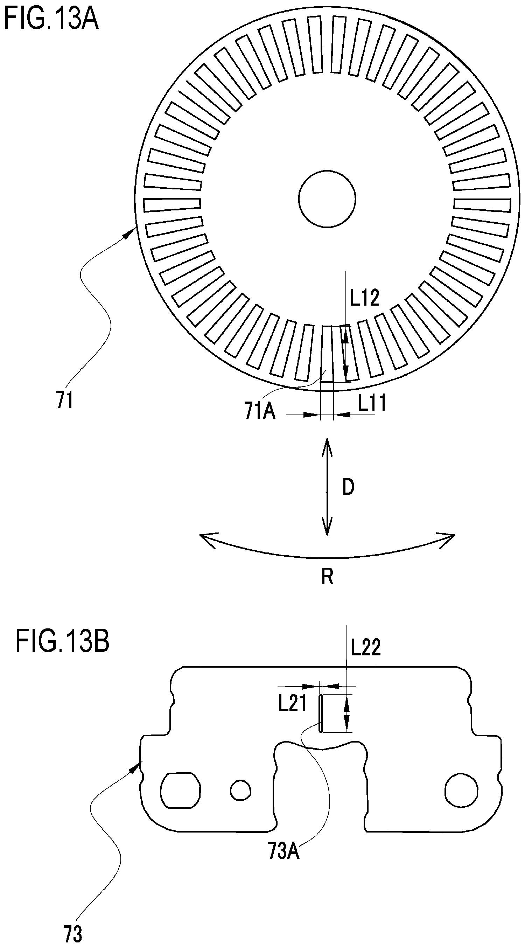

As shown in Figs. 13A and 13B, a dimension L21 of the light quantity stop slit 73A of the fixed slit plate 73 in the width direction and a dimension L22 of the light quantity stop slit 73A of the fixed slit plate 73 in the length direction are smaller than a dimension L11 of the slit 71A of the encoder plate 71 in the width direction and a dimension L12 of the slit 71A of the encoder plate 71 in the length direction. As a result, the fixed slit plate 73 narrows the light emitted from the light emitting unit 72A of the photo-interrupter 72, and the light receiving unit 72B receives the light of which the light quantity is narrowed by the fixed slit plate 73. It should be noted that, here, the width direction is a circumferential direction R of the encoder plate 71, and the length direction is a radial direction D of the encoder plate 71.

In a case in which the slit 71A passes between the light emitting unit 72A and the light receiving unit 72B, the light receiving unit 72B receives the light emitted from the light emitting unit 72A without being shielded, and the photo-interrupter 72 outputs an ON signal. On the other hand, in a case in which the slit 71A does not pass between the light emitting unit 72A and the light receiving unit 72B, that is, in a case in which the encoder plate 71 shields the light emitted from the light emitting unit 72A, the light receiving unit 72B does not receive the light, and the photo-interrupter 72 outputs an OFF signal. In this way, the photo-interrupter 72 can output a rotation detection signal for detecting the rotation of the encoder plate 71.

The controller 62 that receives the signal from the distal end detection switch 56 counts the rotation detection signal from the photo-interrupter 72. In a case in which the controller 62 counts a predetermined number of rotation detection signals, the distal end of the exposure surface 28a of the instant film 28 reaches the exposure position EP. The controller 62 drives the exposure head 50 to start the exposure of the image on the exposure surface 28a. Therefore, the exposure head 50 can accurately expose the image in accordance with the position of the exposure surface 28a.

### Configuration of Cover Member

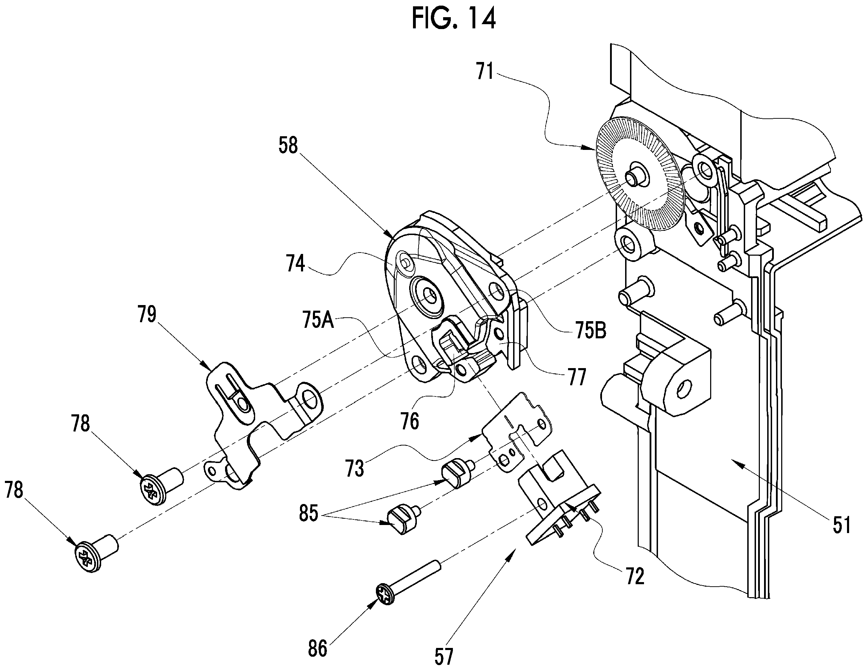

As shown in Fig. 14, the cover member 58 is attached to the case member 51, and covers the encoder plate 71 disposed outside the case member 51. The cover member 58 includes a cover body 74, fixing portions 75A and 75B, an accommodation portion 76, and a contact portion 77.

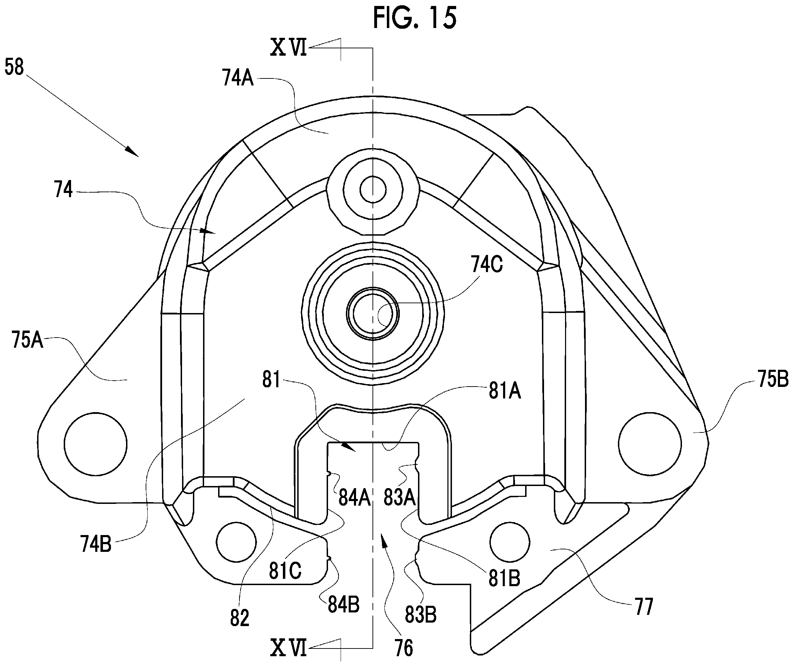

As shown in Fig. 15, the cover body 74 has a semi-circular portion 74A, a rectangular portion 74B, and a fitting hole 74C, and is formed to have a larger outer shape than the encoder plate 71. The semi-circular portion 74A and the rectangular portion 74B are connected to each other. The fitting hole 74C is positioned at the center of a circle formed in a case in which an outer peripheral surface of the semi-circular portion 74A is extended. The fitting hole 74C is rotatably fitted to the end portion 65d of the rotation shaft 65c that protrudes from the encoder plate 71 (see Fig. 12). As a result, the cover member 58 is positioned with respect to the encoder plate 71 and the case member 51.

The fixing portions 75A and 75B are positioned on both side portions of the cover body 74. The accommodation portion 76 is formed at one end of the rectangular portion 74B. The contact portion 77 is disposed at a position continuous to the accommodation portion 76. The fixing portions 75A and 75B are fastened to the case member 51 by screwing with screw members 78 (see Fig. 14). Therefore, the cover member 58 is attached to the case member 51. That is, the cover member 58 is held by the case member 51.

In addition, the fixing portions 75A and 75B are screwed with the screw member 78 and a press member 79 is fastened thereto (see Fig. 14). The press member 79 is fixed outside the cover member 58. The press member 79 comes into contact with the end portion 65d of the rotation shaft 65c (see Fig. 12). As a result, the movement of the rotation shaft 65c in an axial direction is restricted.

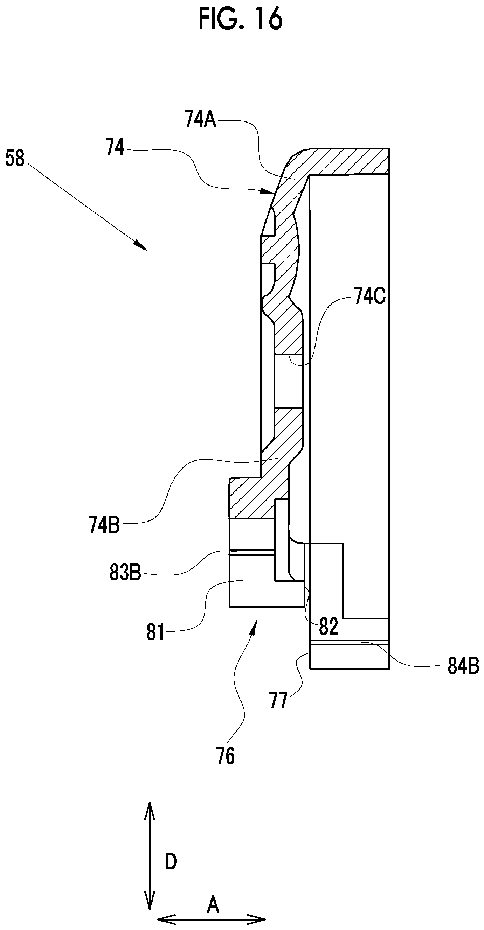

As shown in Fig. 16, the accommodation portion 76 includes an opening portion 81 in which at least a part of the photo-interrupter 72 is accommodated, a groove portion 82 in which at least a part of the fixed slit plate 73 is accommodated, reference holding portions 83A and 83B (see Fig. 15), and deformable holding portions 84A and 84B (see Fig. 15).

The groove portion 82 is formed in accordance with a thickness of the fixed slit plate 73 and is disposed at a position passing through the opening portion 81. In a case in which the cover member 58 is attached to the case member 51 and the fixed slit plate 73 is accommodated in the groove portion 82, the fixed slit plate 73 is positioned parallel to the encoder plate 71 (see Fig. 12).

The contact portion 77 is disposed at a position continuous to the groove portion 82. The contact portion 77 comes into contact with the fixed slit plate 73 accommodated in the groove portion 82. As a result, the fixed slit plate 73 is restricted from moving in the axial direction A. That is, an axial direction A is an axial direction of the rotation shaft 65c and is also an axial direction of the encoder plate 71. The fixed slit plate 73 is fastened to the cover member 58 by screwing with a screw member 85 (see Fig. 14). Therefore, the fixed slit plate 73 is attached to the cover member 58. In addition, in a case in which the fixed slit plate 73 is attached to the cover member 58, the positioning in the radial direction D and the circumferential direction R is also performed.

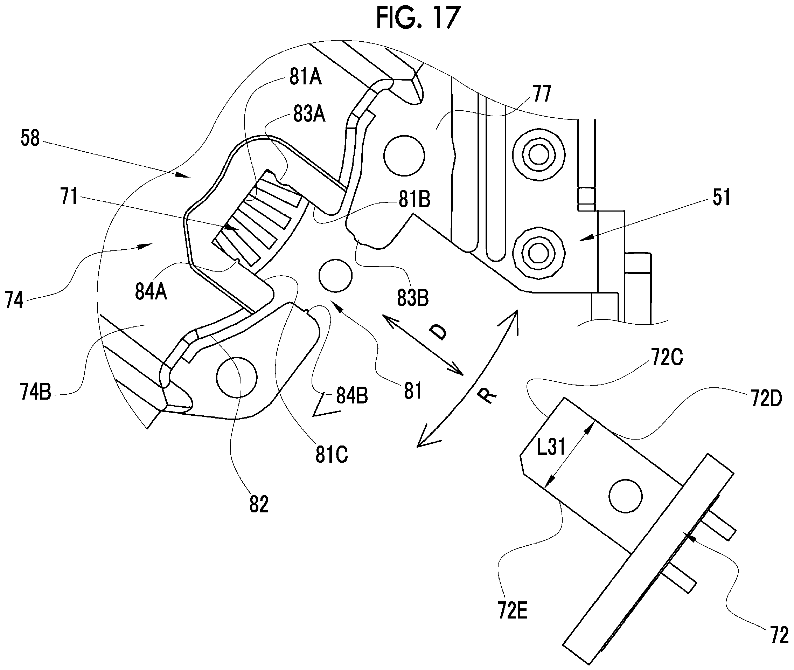

As shown in Fig. 17, the opening portion 81 is formed in accordance with the outer shape of the photo-interrupter 72. In a case in which the photo-interrupter 72 is accommodated in the opening portion 81, the light emitting unit 72A and the light receiving unit 72B are disposed at positions interposing the encoder plate 71 and the fixed slit plate 73 (see Fig. 12). It should be noted that, in Figs. 17 to 20, the fixed slit plate 73 is not shown in order to prevent the drawings from becoming complicated.

The opening portion 81, the reference holding portions 83A and 83B, and the deformable holding portions 84A and 84B correspond to a "positioning portion" in the claims. The "positioning portion" positions the photo-interrupter 72 with respect to the fixed slit plate 73. The reference holding portions 83A and 83B and the deformable holding portions 84A and 84B are positioned inside the opening portion 81.

The opening portion 81 has an inner distal end surface 81A and inner side surfaces 81B and 81C. The inner distal end surface 81A is disposed at a position facing a distal end surface 72C of the photo-interrupter 72. The inner side surfaces 82B and 82C are disposed at positions facing the side surfaces 72D and 72E of the photo-interrupter 72.

It should be noted that the distal end surface 72C of the photo-interrupter 72 is a side on which the encoder plate 71 and the fixed slit plate 73 are positioned, that is, a distal end surface in the radial direction D in a case in which the photo-interrupter 72 is accommodated in the opening portion 81. The side surfaces 72D and 72E of the photo-interrupter 72 are surfaces that are continuous to the distal end surface 72C and on which the light emitting unit 72A and the light receiving unit 72B are disposed therebetween. That is, the side surfaces 72D and 72E are surfaces that are disposed at different positions in the circumferential direction R with respect to the light emitting unit 72A and the light receiving unit 72B.

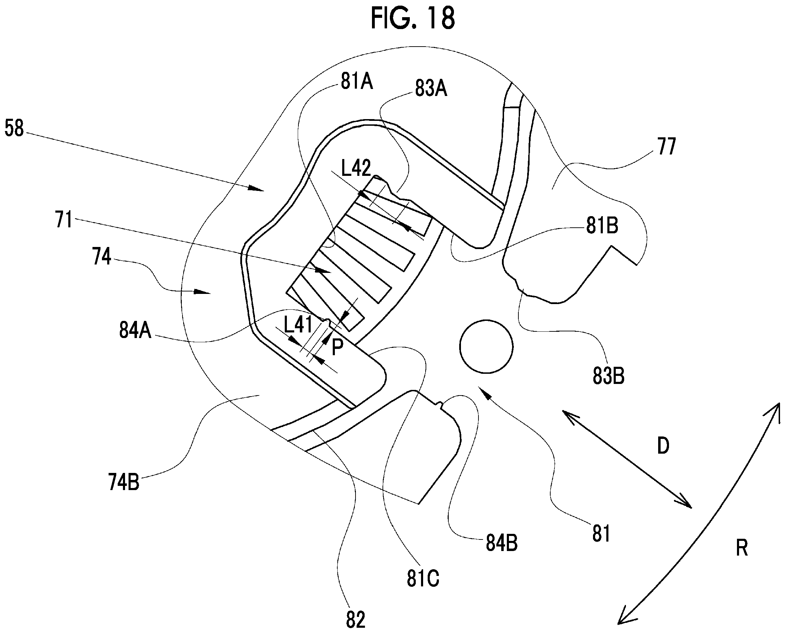

As shown in Fig. 18, the inner side surfaces 81B and 81C of the opening portion 81 are surfaces parallel to the radial direction D. The inner side surface 81B is provided with the reference holding portions 83A and 83B. The inner side surface 81C is provided with deformable holding portions 84A and 84B. That is, the reference holding portion 83A and the deformable holding portion 84A are provided at positions facing each other, and the reference holding portion 83B and the deformable holding portion 84B are provided at positions facing each other. Further, an interval between the reference holding portion 83A and the deformable holding portion 84A and an interval between the reference holding portion 83B and the deformable holding portion 84B are formed in accordance with a dimension L31 (see Fig. 17) in the width direction on the side surfaces 72D and 72E of the photo-interrupter 72. As a result, the photo-interrupter 72 is interposed and held between the reference holding portions 83A and 83B and the deformable holding portions 84A and 84B.

The deformable holding portions 84A and 84B are protrusion portions that protrude from the inner side surface 81C in the circumferential direction R. A protrusion amount P (dimension in the circumferential direction R) of the deformable holding portions 84A and 84B is within an outer shape tolerance range of the photo-interrupter 72. In addition, a dimension L41 of the deformable holding portions 84A and 84B in the radial direction D is the same as the protrusion amount P. In a case in which the outer shape tolerance range of the photo-interrupter 72 is, for example, 0 mm to 0.1 mm, it is preferable that the protrusion amount P of the deformable holding portions 84A and 84B is 0.1 mm or less.

The reference holding portions 83A and 83B have a dimension L42 in the radial direction D that is longer than the dimension L41 in the radial direction of the deformable holding portions 84A and 84B, and have a shape sufficient to hold the photo-interrupter 72. In a case in which the photo-interrupter 72 is accommodated in the opening portion 81, the deformable holding portions 84A and 84B are pressed and deformed by the photo-interrupter 72. Therefore, the photo-interrupter 72 is held between the reference holding portions 83A and 83B and the deformable holding portions 84A and 84B, and is positioned in the circumferential direction R.

The photo-interrupter 72 that is held and positioned by the reference holding portions 83A and 83B and the deformable holding portions 84A and 84B is fixed to the case member 51 by the fixing member. In the present embodiment, the fixing member that fixes the photo-interrupter 72 is a screw member 86 (fastening member) that is fastened to the case member 51.

### Operation of Positioning Portion

As described above, the photo-interrupter 72 is interposed and held between the reference holding portions 83A and 83B and the deformable holding portions 84A and 84B. In a case in which the photo-interrupter 72 is accommodated in the opening portion 81 and held by the reference holding portions 83A and 83B and the deformable holding portions 84A and 84B, the photo-interrupter 72 is inserted into the opening portion 81 from the distal end surface 72C side.

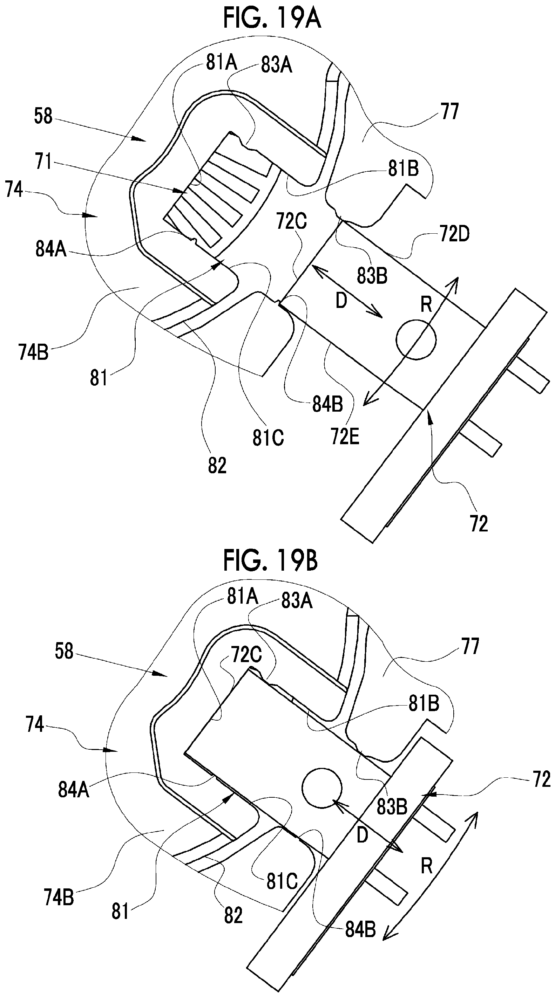

As shown in Fig. 19A, the deformable holding portions 84A and 84B come into contact with the photo-interrupter 72 that is inserted into the opening portion 81. Since the protrusion amounts P of the deformable holding portions 84A and 84B are extremely small dimensions within the outer shape tolerance range of the photo-interrupter 72, the deformable holding portions 84A and 84B are deformed by receiving a pressing force from the photo-interrupter 72.

As shown in Fig. 19B, in a case in which the photo-interrupter 72 is accommodated in the opening portion 81, the deformable holding portions 84A and 84B pressed by the photo-interrupter 72 are deformed to hold the photo-interrupter 72. The photo-interrupter 72 is pushed to a position at which the distal end surface 72C comes into contact with the inner distal end surface 81A of the opening portion 81, and is accommodated in the opening portion 81. As a result, the photo-interrupter 72 is positioned in the radial direction D.

As described so far, the photo-interrupter 72 is held between the reference holding portions 83A and 83B and the deformable holding portions 84A and 84B, and is positioned in the circumferential direction R. The fixed slit plate 73 is positioned with respect to the encoder plate 71, and thus the photo-interrupter 72 is positioned with respect to the fixed slit plate 73.

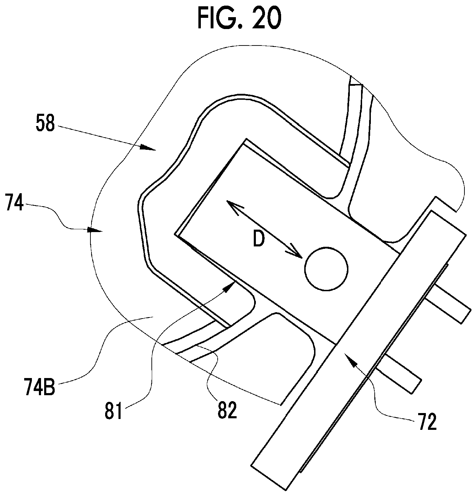

As shown in Fig. 20, in a case of a configuration in which a reference holding portion and a deformable holding portion are not provided as in a printer in the related art, the photo-interrupter 72 inserted into the opening portion 81 may be inserted with an inclination with respect to the radial direction D. In a case in which the photo-interrupter 72 is inserted with an inclination, the position of the photo-interrupter 72 is shifted with respect to the fixed slit plate 73, and sufficient light may not reach the light quantity stop slit 73A of the fixed slit plate 73 from the light emitting unit 72A. In this case, the light received by the light receiving unit 72B cannot be received because the light quantity is narrowed by the light quantity stop slit 73A, and the photo-interrupter 72 cannot output the rotation detection signal of the transport rollers 53. Therefore, it is necessary to perform an operation of reassembling the photo-interrupter 72, and thus the yield is poor, and the production cost is increased. In addition, in a case in which the gap between the photo-interrupter 72 and the opening portion 81 is reduced, it is difficult to insert the photo-interrupter 72 into the opening portion 81, and it takes time and effort.

On the other hand, since the printer unit 13 according to the present embodiment comprises the positioning portion including the reference holding portions 83A and 83B and the deformable holding portions 84A and 84B, the photo-interrupter 72 is positioned with respect to the fixed slit plate 73, without being inclined. Accordingly, sufficient light is emitted from the light emitting unit 72A to the light quantity stop slit 73A of the fixed slit plate 73, and the light of which the light quantity is narrowed by the light quantity stop slit 73A is received by the light receiving unit 72B. Therefore, the photo-interrupter 72 can output the rotation detection signal of the transport rollers 53.

As described so far, the photo-interrupter 72 can be accurately positioned with respect to the fixed slit plate 73 by a simple operation of inserting the photo-interrupter 72 into the opening portion 81. Further, the yield is improved, and an increase in cost can be suppressed.

In the above-described embodiment, although a mono-sheet type instant film has been described as the sheet-like recording medium, the present invention is not limited to this, and any recording medium may be used, for example, thermal paper, ink jet paper, or the like may be used. In a case in which the recording medium is the thermal paper, the printer is a thermal printer, and in a case in which the recording medium is the ink jet paper, the printer is an ink jet printer. In addition, in the above-described embodiment, an example has been described in which the present invention is applied to the digital camera with a printer, but the present invention is not limited to this, and the present invention may be applied to a single printer. In addition, in the above-described embodiment, an example has been described in which the present invention is applied to the digital camera with a printer, but the present invention is not limited to this, and the present invention may be applied to an analog camera with a printer.

In the above-described embodiment, the hardware structure of the processing units that execute various types of processing, such as the controller 62, is the following various processors. The various processors include a central processing unit (CPU) that is a general-purpose processor that executes software (programs) to function as various processing units, a graphical processing unit (GPU), a programmable logic device (PLD) that is a processor having a circuit configuration changeable after manufacture, such as a field programmable gate array (FPGA), and an exclusive electric circuit that is a processor having a circuit configuration exclusively designed to execute various types of processing.

One processing unit may be configured by one of these various processors, or may be configured by a combination of two or more processors of the same type or different types (for example, a combination of a plurality of FPGAs, a combination of a CPU and an FPGA, or a combination of a CPU and a GPU). Further, a plurality of the processing units may be configured by one processor. As an example in which the plurality of processing units are configured by one processor, first, there is a form in which one processor is configured by a combination of one or more CPUs and software, and this processor functions as the plurality of processing units, as represented by a computer, such as a client or a server. Second, there is a form in which a processor, which implements the functions of the entire system including the plurality of processing units with one integrated circuit (IC) chip, is used, as represented by a system-on-a-chip (SoC) or the like. As described above, various processing units are configured by one or more of the various processors described above, as the hardware structure.

Further, the hardware structure of these various processors is, more specifically, an electric circuit (circuitry) having a form in which circuit elements, such as semiconductor elements, are combined.

### Explanation of References

10: digital camera with printer
11: camera body
12: imaging unit
13: printer unit
15: imaging window
16: release switch
17: rear display unit
18: operation unit
19: imaging optical system
20: imaging element
21: film discharge port
22: loading lid
22a: hinge portion
22b: film press portion
23: loading chamber
24: instant film pack
26: case
27: film press plate
27a, 27b: sheet
27c: opening
27d: hole
27e: opening
27f: hole
27g: lower end portion
27h: lower end portion
28: instant film
28a: exposure surface
30: film cover
31: case member
31a: exposure aperture
31b: notch
31c: feed port
31d: light shielding seal
32: lid
32a: opening
32b: unit support projection
32c: caulking pin
32d: support piece
33: mask sheet
33a: screen opening
34: photosensitive sheet
35: cover sheet
36: developer pod
37: trap portion
38: developer
39: gap
40: image observation surface
50: exposure head
51: case member
52: roller driving mechanism
53: transport roller
54: spreading roller
55: spreading control member
56: distal end detection switch
57: rotation detection sensor
58: cover member
59: claw member
59a: distal end portion
61: claw member driving mechanism
62: controller
65: capstan roller
65a: grip roller member
65b, 66b: driving gear
65c, 66c: rotation shaft
65d: end portion
66: pinch roller
66a: roller member
67, 68: spreading roller
71: encoder plate
71A: slit
72: photo-interrupter
72A: light emitting unit
72B: light receiving unit
72C: distal end surface
72D, 72E: side surface
73: fixed slit plate
73A: light quantity stop slit
74: cover body
74A: semi-circular portion
74B: rectangular portion
74C: fitting hole
75A, 75B: fixing portion
76: accommodation portion
77: contact portion
78: screw member
79: press member
81: opening portion
81A: inner distal end surface
81B, 81C: inner side surface
82: groove portion
83A, 83B: reference holding portion
84A, 84B: deformable holding portion
85: screw member
86: screw member
A: axial direction
D: radial direction
EP: exposure position
L11, L12, L21, L22, L31, L41, L42: dimension
P: protrusion amount
R: circumferential direction
X, Y, Z: direction

## Claims

1. A printer comprising:
an encoder plate that rotates in conjunction with transport of a recording medium and on which slits are radially formed;
a photo-interrupter that emits light to the encoder plate and receives the light to output a rotation detection signal;
a fixed slit plate that narrows the light emitted from the photo-interrupter; and
a positioning portion that positions the photo-interrupter with respect to the fixed slit plate and includes a reference holding portion and a deformable holding portion provided at a position facing the reference holding portion, in which the deformable holding portion is deformed to hold the photo-interrupter.

2. The printer according to claim 1,
wherein the photo-interrupter is interposed and held between the reference holding portion and the deformable holding portion.

3. The printer according to claim 1 or claim 2,
wherein the deformable holding portion is a protrusion portion that protrudes in a circumferential direction of the encoder plate.

4. The printer according to any one of claims 1 to 3,
wherein a protrusion amount of the deformable holding portion is within an outer shape tolerance range of the photo-interrupter.

5. The printer according to any one of claims 1 to 4,
wherein the positioning portion has an opening portion in which at least a part of the photo-interrupter is accommodated, and
the reference holding portion and the deformable holding portion are positioned inside the opening portion.

6. The printer according to claim 5,
wherein the deformable holding portion is deformed by being pressed by the photo-interrupter in a case in which the photo-interrupter is accommodated in the opening portion.

7. The printer according to any one of claims 1 to 6, further comprising:
a fixing member that fixes the photo-interrupter positioned by the positioning portion.

8. The printer according to claim 7, further comprising:
a case member that holds the encoder plate and the positioning portion,
wherein the fixing member is a fastening member that is fastened to the case member.

9. The printer according to any one of claims 1 to 8, further comprising:
a transport roller that transports the recording medium,
wherein the encoder plate is provided on the same axis as the transport roller.

10. The printer according to any one of claims 1 to 9,
wherein the recording medium is an instant film, and
the printer further comprises an exposure head that exposes the instant film to record an image.

11. A digital camera with a printer, comprising:
the printer according to any one of claims 1 to 10; and
an imaging element that images a subject,
wherein the recording medium is an instant film, and
the printer includes an exposure head that exposes an image captured by the imaging element onto the instant film.
